(19) Europäisches Patentamt
European Patent Office
Office européen des brevets

(11) **EP 3 569 880 A1**

(12) **EUROPÄISCHE PATENTANMELDUNG**

(43) Veröffentlichungstag:
20.11.2019  Patentblatt 2019/47

(51) Int Cl.:
*F16B 37/04* (2006.01)  *F16B 5/06* (2006.01)
*F16B 37/06* (2006.01)

(21) Anmeldenummer: **19173867.3**

(22) Anmeldetag: **10.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.05.2018   DE 102018111957**

(71) Anmelder: **Schmidt, Heiko**
**93138 Lappersdorf (DE)**

(72) Erfinder: **Schmidt, Heiko**
**93138 Lappersdorf (DE)**

(74) Vertreter: **Glück Kritzenberger Patentanwälte PartGmbB**
**Hermann-Köhl-Strasse 2a**
**93049 Regensburg (DE)**

(54) **SCHWIMMENDE, VERLIERGESICHERTE ANORDNUNG EINES VERBINDUNGSELEMENTES AN EINEM BAUTEIL**

(57)   Die Erfindung betrifft eine schwimmende, verliergesicherte Anordnung eines Verbindungselements (1) an einem Bauteil (2), bei der das Verbindungselement (1) sich entlang einer Längsachse (LA) erstreckt und zumindest einen Kopfabschnitt (1.1) und einen daran entlang der Längsachse (LA) anschließenden, gegenüber dem Kopfabschnitt (1.1) zurückversetzten Schaftabschnitt (1.2) aufweist, bei der der Schaftabschnitt (1.2) zumindest abschnittsweise durch eine Durchbrechung (2') im Bauteil (2) geführt ist und zumindest im Bereich des dem Kopfabschnitt (1.1) gegenüberliegenden freien Ende (1.2') des Schaftabschnittes (1.2) mit einem Halteblechelement (3) derart verbunden ist, dass das Verbindungselement (1) schwimmend und verliergesichert am Bauteil (2) angeordnet ist, wobei der Kopfabschnitt (1.1) erste Verriegelungsmittel (4, 4', 4", 4''') und/oder das Halteblechelement (3) dritte Verriegelungsmittel (6) und das Bauteil (2) korrespondierende, zweite Verriegelungsmittel (5, 5', 5", 5'''', 5''''') aufweisen, wobei die ersten und/oder dritten Verriegelungsmitteln (4, 4', 4", 4''', 6) mit den zweiten Verriegelungsmittel (5, 5', 5", 5'''', 5''''') derart zusammenwirken, dass das in der Durchbrechung (2') des Bauteils (2) zumindest abschnittsweise aufgenommene Verbindungselement (1) gegen ein zumindest abschnittsweises Verdrehen um die Längsachse (LA) in Bezug auf das Bauteil (2) gesichert ist.

Fig. 1

**Beschreibung**

Die Erfindung betrifft eine schwimmende, verliergesicherte Anordnung eines Verbindungselementes an einem Bauteil.

Im Bereich der Verbindungstechnik ist es bei einer Vielzahl von Anwendungen erforderlich, ein vorzugsweise gewindetragendes Verbindungselement, wie beispielsweise eine Mutter, an einer Bauteiloberfläche zu befestigen. Um einen Toleranzausgleich im Hinblick auf den Verschraubungspunkt in und bezogen auf die Bauteiloberfläche zu erreichen, finden bevorzugt schwimmende Anordnung des Verbindungselementes an der Bauteiloberfläche Verwendung. Eine typische Montagesituation betrifft beispielsweise ein nur einseitig zugängliches Bauteil, bei dem auf der nicht zugänglichen Bauteiloberfläche eine schwimmende Anordnung eines Verbindungselementes erforderlich ist.

Hierzu finden beispielsweise Verbindungselemente mit einer käfigartigen Halterung aus einem vorzugsweise metallischen Flachmaterial Verwendung, bei denen das Verbindungselement in der käfigartigen Halterung aus einem bleibend verformbaren metallischen Flachmaterial aufgenommen ist und über dieses an der Bauteiloberfläche bzw. einer darin vorgesehenen Vorlochung oder Bohrung schwimmend angeordnet ist.

Gewindetragende Verbindungselemente derartigen Aufbaus werden häufig auch als "Käfigmutterelemente" bzw. "Käfigmuttern" bezeichnet. Mittels derartiger Käfigmuttern wird ein Toleranzausgleich des Verschraubungspunktes in x/y-Richtung, d.h. in der Ebene der Bauteiloberfläche erreicht. Der Käfig derartiger Käfigmuttern wird hierbei häufig als Stanzteil hergestellt und auf einem Blechelement verschweißt. In diesem Käfig ist ein kleineres Mutterelement eingeschlossen, welches in x- und y-Richtung bzw. in der Ebene der Bauteiloberfläche beweglich ist. Nachteilig ist die Herstellung des Käfigs und die Verschweißung dessen auf dem Blechelement arbeits- und kostenintensiv, zumal diese Montage üblicher Weise manuell durchgeführt wird. Darüber hinaus weisen derartig Käfigmutter ein hohes Gewicht und damit verbunden einen hohen Materialbedarf auf.

Auch sind Einbausituationen bekannt, bei denen die schwimmende, verliergesicherte Anordnung des Verbindungselementes, vorzugsweise eines Mutterelementes in einem Blindnietelement erfolgt, welches mit dem vormontierten Verbindungselement durch eine Vorlochung in ein Bauteil aus einem metallischen Flachmaterial geführt wird und mit diesen dann über einer Nietverbindung verbunden wird. Das Blindnietelement für sich genommen dient zur schwimmenden, verliergesicherten Halterung des Verbindungselementes. Nachteilig erfordern bekannte Anordnungen Blindnietelemente mit vergleichsweise großen Außendurchmessern, um eine schwimmende und verliergesicherte Halterung von Verbindungselementen zu gewährleisten. Insbesondere bei beengten Einbauverhältnissen entstehen dadurch Nachteile. Gleichzeitig besteht bei den bekannten Lösungen ein erhöhter Materialaufwand.

Ausgehend davon ist es Aufgabe der Erfindung, eine schwimmende und verliergesicherte Anordnung eines Verbindungselementes an einem Bauteil anzugeben, welche zusätzlich noch verdrehgesichert ist, die einen reduzierten Materialaufwand aufweist und die zur Verwendung bei beengten Einbauverhältnissen geeignet ist. Die Aufgabe wird durch die Merkmale des Patentanspruches 1 gelöst.

Einer der wesentlichen Aspekte der erfindungsgemäßen schwimmenden, verliergesicherten Anordnung ist darin zu sehen, dass das Verbindungselement sich entlang einer Längsachse erstreckt und zumindest einen Kopfabschnitt und einen daran entlang der Längsachse anschließenden, gegenüber dem Kopfabschnitt zurückversetzten Schaftabschnitt aufweist, bei der der Schaftabschnitt zumindest abschnittsweise durch eine Durchbrechung im Bauteil geführt ist und zumindest im Bereich des dem Kopfabschnitt gegenüberliegenden freien Ende des Schaftabschnittes mit einem Halteblechelement derart verbunden ist, dass das Verbindungselement schwimmend und verliergesichert am Bauteil angeordnet ist, wobei der Kopfabschnitt erste Verriegelungsmittel und/oder das Halteblechelement dritte Verriegelungsmittel und das Bauteil jeweils korrespondierende, zweite Verriegelungsmittel aufweisen, wobei die ersten und/oder dritten Verriegelungsmitteln mit den zweiten Verriegelungsmittel derart zusammenwirken, dass das in der Durchbrechung des Bauteils zumindest abschnittsweise aufgenommene Verbindungselement gegen ein zumindest abschnittsweises Verdrehen um die Längsachse in Bezug auf das Bauteil gesichert ist. Das Bauteil ist dabei vorzugsweise zwischen dem Kopfabschnitt des Verbindungselementes und dem Halteblechelement aufgenommen. Besonders vorteilhaft kann damit der Montage- und Materialaufwand für eine derartige schwimmende, verlier- und verdrehgesicherte Anordnung eines Verbindungselementes an einem Bauteil wesentlich reduziert werden. Insbesondere kann die erfindungsgemäße Anordnung vollautomatisiert hergestellt werden, wodurch im Vergleich zu einer manuellen Montage des Käfigs bei Käfigmuttern, eine deutliche Kostenersparnis erzielt werden kann. Auch ist der für eine derartige Anordnung erforderliche Bauraum im Vergleich zu bekannten Lösungen verkleinert und weist aufgrund des Wegfalls von Schweißverbindungen einen reduzierten Energieverbrauch im Vergleich zu den bekannten Käfiglösungen auf.

Vorteilhaft sind die ersten, zweiten und dritten Verriegelungsmittel im Bereich der Durchbrechung des Bauteils angeordnet. Diese sind hinsichtlich Anzahl, Form und/oder Positionierung aneinander angepasst, und zwar derart, dass zumindest ein Teil oder zumindest ein Abschnitt des ersten Verriegelungsmittels mit zumindest einem Teil oder zumindest einem Abschnitt der zweiten Verriegelungsmittel beim Drehen des Verbindungselementes zur Anlage gelangt. Hierdurch wird besonders vorteilhaft unter Beibehaltung der gewünschten schwimmenden und verliergesicherten Anordnung auch noch eine verdrehgesicherte Anordnung des Verbindungselementes am Bauteil erreicht.

Weiterhin vorteilhaft weist das aus einem Flachmaterial hergestellte Halteblechelement eine Durchbrechung auf, dessen Durchmesser und/oder Querschnittsform zumindest abschnittsweise an den Durchmesser und/oder die Querschnittsform des Schaftabschnittes des Verbindungselementes im Bereich des freien Endes angepasst ist.

Vorzugsweise ist das Halteblechelement verliergesichert mit dem freien Ende des Schaftabschnittes des Verbindungselementes verbunden, wobei in einer weiteren Ausführungsvariante das Halteblechelement ebenfalls verdrehgesichert oder fest mit dem freien Ende des Schaftabschnittes des Verbindungselementes verbunden ist.

Weiterhin vorteilhaft ist das Halteblechelement verschiebbar entlang der Längsachse am Schaftabschnitt des Verbindungselementes angeordnet. Alternativ oder zusätzlich ist das freie Ende des Schaftabschnittes derart in der Durchbrechung des Halteblechelementes aufgenommen, dass das freie Ende von der Unterseite des Halteblechelementes in die Durchbrechung zurückspringt. Dabei ist das Halteblechelement vorteilhaft gegen ein zumindest abschnittsweises Verdrehen um die Längsachse des Verbindungselementes am freien Ende des Schaftabschnittes des Verbindungselementes gesichert. Vorteilhaft kann hierdurch beim Verschrauben der erfindungsgemäßen Anordnung mit einem weiteren Bauteil eine Vorspannung eingebracht werden, und zwar kann das Verbindungselement, das Bauteil, das Halteblechelement sowie das weitere Bauteil entlang der Längsachse miteinander verspannt werden bzw. über das Drehmoment des Schraubmittels eine Vorspannung eingebracht werden. Vorzugsweise ist die Anbindung des Halteblechelements am Schaftabschnitt des Verbindungselementes derart gewählt, dass beim Einbringen des Drehmomentes eine Verschiebung des Halteelementes entlang des Schaftabschnittes mit einer Kraft möglich ist, die noch unterhalb der zur Herstellung der finalen Schraubverbindung erforderlichen Vorspannkraft liegt.

Weiterhin vorteilhaft weist das Halteblechelement eine Außenkontur und/oder Außenabmessungen auf, die eine Durchführung des Halteblechelementes durch die Durchbrechung des Bauteils sperren.

In einer Ausführungsvariante sind die ersten Verriegelungsmittel von zumindest einer in die Unterseite des Kopfabschnittes eingebrachte, nutförmige Ausnehmung und die korrespondierenden, zweiten Verriegelungsmittel von zumindest einem von der Oberseite des Bauteils in Richtung der Längsachse abstehenden Stegabschnitt gebildet. Alternativ können die ersten Verriegelungsmittel von zumindest einer von der Unterseite des Kopfabschnittes abstehenden Stegabschnitt und die korrespondierenden, zweiten Verriegelungsmittel von zumindest einer in die Oberseite des Bauteils eingebrachten, nutförmigen Ausnehmung gebildet sein. Es versteht sich, dass beide Ausführungsvarianten auch gemischt realisiert sein können, d.h. die ersten Verriegelungsmittel des Kopfabschnittes sowohl von zumindest einer nutförmigen Ausnehmung und einem Stegabschnitt gebildet sein, die mit korrespondierenden, zweiten Verriegelungsmitteln des Bauteils in Form eines Stegabschnittes bzw. einer nutförmigen Ausnehmung zusammenwirken.

Besonders vorteilhaft weist die nutförmige Ausnehmung beispielsweise eine U-förmige oder C-förmige Querschnittsform auf und/oder die zumindest eine nutförmige Ausnehmung und der zumindest eine Stegabschnitt erstrecken sich radial zur Längsachse, wobei der zumindest eine Stegabschnitt hinsichtlich der radialen Längserstreckung an die radiale Längserstreckung der nutförmigen Ausnehmung angepasst ist. Die Stegabschnitte weisen hierbei eine Breite auf, die kleiner als die Breite der nutförmigen Ausnehmungen ist. Vorteilhaft ergibt sich jeweils ein Schwimmbereich, der trotz der Verdrehsicherung noch eine schwimmende Anordnung des Verbindungselementes gewährleistet.

In einer bevorzugten Ausführungsvariante sind die ersten und zweiten Verriegelungsmittel jeweils durch zumindest zwei nutförmige Ausnehmung oder zumindest zwei Stegabschnitte gebildet sind, d.h. es sowohl am Kopfabschnitt als auch am Bauteil zumindest zwei nutförmige Ausnehmung oder Stegabschnitte vorgesehen.

In einer alternativen Ausführungsvariante können die ersten Verriegelungsmittel von zumindest einem von der Unterseite des Kopfabschnittes abstehenden nasenförmigen Vorsprung und die korrespondierenden, zweiten Verriegelungsmittel von zumindest einer in die Oberseite des Bauteils eingebrachte, vorzugsweise kreisförmige Verriegelungsausnehmung gebildet sein. Alternativ dazu können die ersten Verriegelungsmittel von zumindest einer in die Unterseite des Kopfabschnittes eingebrachten, vorzugsweise kreisförmigen Verriegelungsausnehmung und die korrespondierenden, zweiten Verriegelungsmittel von zumindest einem von der Oberseite des Bauteils abstehenden nasenförmigen Vorsprung gebildet sein. Auch sind wiederum Mischformen dieser Ausführungsvarianten möglich. Besonders vorteilhaft sind die kreisförmigen Verriegelungsausnehmung und die nasenförmigen Vorsprünge jeweils hinsichtlich Anzahl, Form und/oder Positionierung in Bezug auf die Längsachse zueinander angepasst.

In einer weiteren alternativen Ausführungsvariante sind die ersten Verriegelungsmittel durch eine von der Kreisform abweichende Querschnittsform des Kopfabschnittes oder zumindest einem Kantenabschnitt des Kopfabschnittes gebildet, wobei die korrespondierenden zweiten Verriegelungsmittel durch zumindest ein, vorzugsweise mehrere Verriegelungssickenelemente gebildet sind, die von der Oberseite des Bauteils abstehen. Damit wird eine besonders einfach herstellbare Verdrehsicherung erreicht.

Weiterhin vorteilhaft können auch die dritten Verriegelungsmittel durch eine von der Kreisform abweichende Querschnittsform des Halteblechelementes oder zumindest einem Kantenabschnitt des Halteblechelementes gebildet sein, die mit den korrespondierenden zweiten Verriegelungsmittel zusammenwirken, die durch zumindest ein, vorzugsweise mehrere Verriegelungssickenelemente gebildet sind, die von der Unterseite des Bauteils abstehen. Vorteilhaft wird damit auch eine Drehverriegelung des Halteblechelementes gegenüber dem Bauteil erreicht. Vorteilhaft sind die genannten Verriegelungssickenelemente in das das Bauteil bildende Flachmaterial eingeformt und damit einfach und kostengünstig herstellbar.

Das Verbindungselement ist vorzugsweise als gewindetragendes Verbindungselement, insbesondere als ein Mutterelement oder als ein Bolzenelement oder als ein Schraubelement ausgebildet und die die Durchbrechung im Bauteil und/oder die Durchbrechung im Halteblechelement sind durch eine Vorlochung oder eine Bohrung gebildet.

In einer weiteren vorteilhaften Ausführungsvariant ist das Bauteil durch ein Blindnietelement mit einer Durchbrechung umfassend einen Halteabschnitt, einen Anlageabschnitt, einen Nietschaftabschnitt und einen Nietflansch gebildet, welche entlang der Längsachse aneinander anschließen. Das Verbindungselement wird erfindungsgemäß durch die Durchbrechung des Blindnietelementes geführt und dort schwimmend, verlier- und erfindungsgemäß drehgesichert angeordnet. Hierzu erstreckt sich die Durchbrechung über den Halteabschnitt bis zum Anlageabschnittes und geht entlang des Anlageabschnittes querschnittsverbreiternd in einen vorzugsweise zylinderförmigen Hohlnietraum über, der vom Nietschaftabschnitt und vom daran anschließenden Nietflansch umschlossen ist. Nach dem Einbringen des Verbindungselementes in das Blindnietelementes erstreckt sich das freie Ende des Schaftabschnittes bis in den Hohlnietraum und dort vorzugsweise in den Bereich des Nietschaftabschnittes.

Weiterhin vorteilhaft bildet der Anlageabschnitt eine ringförmige, schräg zur Längsachse verlaufenden Anlagefläche aus und zwischen den am freien Ende des Schaftabschnittes verliergesichert angeordneten Halteblechelement und dem Anlageabschnitt ist ein Anlageblechelement mit einer Durchbrechung und einer oberseitigen Randabschrägung angeordnet, wobei das Anlageblechelement mit der Randabschrägung an der schräg zur Längsachse verlaufenden Anlagefläche des Anlageabschnittes flächig anliegt. Vorteilhaft erstreckt sich das Anlageblechelement über den gesamten Hohlnietraum und bildet somit eine ebene bzw. flach Anlagefläche für das Halteblechelement aus. Vorzugsweise sind sowohl das Halteblechelement als auch das Anlageblechelement scheibenförmig, insbesondere ringscheibenförmig ausgebildet.

Weiterhin vorteilhaft entspricht der Durchmesser der Durchbrechung des Anlageblechelementes näherungsweise dem Durchmesser der Durchbrechung des Halteabschnittes, d.h. die Durchbrechung des Halteabschnittes setzt sich in der Durchbrechung des Anlageblechabschnittes fort und bildet somit einen "Schwimmraum" für das Verbindungselement aus.

Vorteilhaft liegt das Halteblechelement an der Unterseite des Anlageblechelementes an, wobei der Außendurchmesser des Halteblechelements kleiner als der Durchmesser des Hohlnietraumes und größer als der Durchmesser der Durchbrechung des Anlageblechelementes gewählt ist. Hierdurch kann das am freien Ende des Verbindungselements befestigte Halteblechelement im Hohlnietraum in x-, y-Richtung bewegt werden, d.h. die schwimmende Anordnung des Verbindungselementes in der Durchbrechung des Blindnietelements ist damit gewährleistet.

In einer alternativen Ausführungsvariante können die dritten Verriegelungsmittel durch zumindest einen von der Oberseite des Halteblechelementes abstehenden nasenförmigen Vorsprung und/oder einen Stegabschnitt gebildet sein, der mit den korrespondierenden zweiten Verriegelungsmittel in Form von Ausnehmungen zusammenwirkt. Es versteht sich, dass natürlich auch vice versa die dritten Verriegelungsmittel durch zumindest eine in die Oberseite des Halteblechelementes eingebrachte Ausnehmung gebildet sein können, die mit korrespondierenden zweiten Verriegelungsmittel in Form von einem von der Unterseite des Bauteils abstehenden nasenförmigen Vorsprung und/oder Stegabschnitt zusammenwirkt.

Ebenfalls ist Gegenstand der vorliegenden Erfindung eine vorgefertigte Baugruppe umfassend eine erfindungsgemäße Anordnung. Vorzugsweise ist das Bauteil der vorgefertigten Baugruppe mit einem weiteren Bauteil mit einer korrespondierenden Durchbrechung verbindbar, welches beispielsweise ebenfalls aus einem Flachmaterial hergestellt sein kann. Im Bauteil oder im weiteren Bauteil kann eine flächige Sicke vorgesehen sein, in der die jeweilige Durchbrechung angeordnet ist.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1    beispielhaft ein schematischer Längsschnitt durch eine schwimmende, verliergesicherte Anordnung eines Verbindungselements an einem Bauteil gemäß der Erfindung,

Fig. 2 beispielhaft ein schematischer Längsschnitt durch ein als Mutterelement ausgebildetes Verbindungselement mit ersten Verriegelungsmitteln,

Fig. 3 beispielhaft eine schematische Draufsicht auf die Unterseite des Verbindungselementes gemäß Figur 2,

Fig. 4 beispielhaft eine schematische Draufsicht auf die Unterseite eines Halteblechelementes,

Fig. 5 beispielhaft ein schematischer Längsschnitt durch ein aus einem Flachmaterial hergestellten Bauteils mit zweiten Verriegelungsmitteln,

Fig. 6 beispielhaft eine schematische Draufsicht auf die Oberseite des aus einem Flachmaterial hergestellten Bauteils gemäß Figur 5,

Fig. 7 beispielhaft ein schematischer Längsschnitt durch eine alternative schwimmende, verliergesicherte Anordnung eines Verbindungselements an einem Bauteil gemäß der Erfindung,

Fig. 8 beispielhaft ein schematischer Längsschnitt durch ein als Mutterelement ausgebildetes Verbindungselement mit alternativen ersten Verriegelungsmitteln,

Fig. 9 beispielhaft eine schematische Draufsicht auf die Unterseite des Verbindungselementes gemäß Figur 8,

Fig. 10 beispielhaft ein schematischer Längsschnitt durch ein aus einem Flachmaterial hergestellten Bauteils mit alternativen zweiten Verriegelungsmitteln,

Fig. 11 beispielhaft eine schematische Draufsicht auf die Oberseite des aus einem Flachmaterial hergestellten Bauteils gemäß Figur 10,

Fig. 12 beispielhaft eine Draufsicht auf die Oberseite einer erfindungsgemäßen Anordnung mit in Form von Sickenelementen ausgebildeten korrespondierenden zweiten Verriegelungsmitteln,

Fig. 13 beispielhaft einen Schnitt entlang der Linie A-A durch die Anordnung gemäß der Figur 12,

Fig. 14 beispielhaft einen Schnitt entlang der Linie B-B durch die Anordnung gemäß der Figur 12,

Fig. 15 beispielhaft ein schematischer Längsschnitt durch ein Verbindungselement mit an der Unterseite des Kopfabschnittes angeordneten, nasenförmigen Vorsprüngen als erste Verriegelungsmittel,

Fig. 16 beispielhaft eine schematische Ansicht der Unterseite des Verbindungselementes gemäß Figur 15,

Fig. 17 beispielhaft eine schematische Draufsicht auf die Oberseite eines Bauteils mit alternativ ausgebildeten zweiten Verriegelungsmitteln in Form von korrespondierenden Ausnehmungen,

Fig. 18 beispielhaft ein Längsschnitt durch das Bauteil gemäß Figur 17,

Fig. 19 beispielhaft ein schematischer Längsschnitt durch ein Verbindungselement mit an der Unterseite des Kopfabschnittes angeordneten Ausnehmungen als erste Verriegelungsmittel,

Fig. 20 beispielhaft eine schematische Ansicht der Unterseite des Verbindungselementes gemäß Figur 19,

Fig. 21 beispielhaft eine schematische Draufsicht auf die Oberseite eines Bauteils mit alternativ ausgebildeten zweiten Verriegelungsmitteln in Form von korrespondierenden nasenförmigen Vorsprüngen,

Fig. 22 beispielhaft ein Längsschnitt durch das Bauteil gemäß Figur 21,

Fig. 23 beispielhaft einen seitlichen Längsschnitt durch eine erfindungsgemäße Anordnung in Form einer vorgefertigten Baugruppe,

Fig. 24 beispielhaft eine erste Ausführungsvariante einer Anbindung einer erfindungsgemäßen Anordnung in Form einer vorgefertigten Baugruppe an ein weiteres Bauteil,

Fig. 25 beispielhaft eine perspektivische Darstellung einer alternativen Ausführungsvariante einer schwimmende, verliergesicherte Anordnung eines Verbindungselements an einem in Form eines Blindnietelementes ausgebildeten Bauteil gemäß der Erfindung und

Fig. 26 beispielhaft einen Längsschnitt durch die Anordnung gemäß Figur 25.

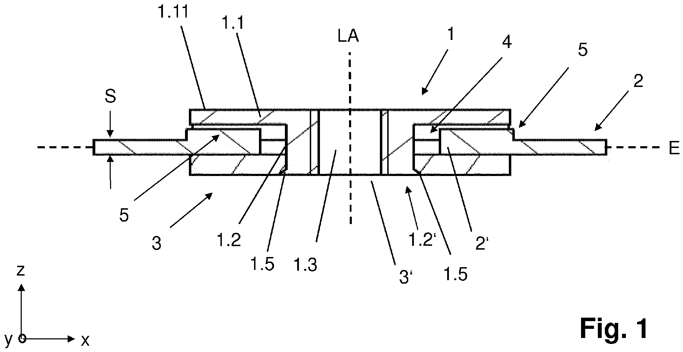

In Figur 1 ist beispielhaft eine erfindungsgemäße Anordnung eines Verbindungselements 1 an einem aus einem Flachmaterial hergestellten Bauteil 2, bei der das Verbindungselement 1 sowohl schwimmend als auch verliergesichert am Bauteil 2 angeordnet ist. Das Bauteil 2 kann beispielsweise aus Metall oder Kunststoff hergestellt sein.

Das Bauteil 2 ist im vorliegenden Ausführungsbeispiel durch ein blechförmiges Bauteil oder ein blechförmiges Werkstück mit zumindest einem abschnittsweise flachen Montagebereich gebildet. In einer noch später genauer beschriebenen Ausführungsvariante kann das Bauteil 2 auch durch ein Niethülsenelement, insbesondere ein Blindniethülsenelement gebildet sein, welches zur Aufnahme des Verbindungselementes 1 eingerichtet ist.

Zur genaueren Erläuterung der erfindungsgemäßen Anordnung ist in einzelnen Figuren ein kartesisches Koordinatensystem umfassend eine x-, y- und z-Achse eingezeichnet. Das flache metallische Bauteil 2 erstreckt sich hierbei beispielsweise zumindest im Verbindungsbereich entlang einer Ebene E, die parallel zu einer durch die x-Achse und die y-Achse aufgespannten Ebene verläuft. Das Verbindungselement 1 erstreckt sich ferner entlang einer Längsachse LA, welche parallel zur z-Achse verläuft.

Unter einer verliergesicherten Anordnung des Verbindungselementes 1 am Bauteil 2 im Sinne der Erfindung wird eine Befestigung des Verbindungselementes 1 im oder am Bauteil 2 verstanden, mittels der das Verbindungselement 1 im montierten Zustand gegen ein Verlieren und/oder Auspressen gesichert ist. Vorzugsweise wird das Verbindungselement 1 hierzu zumindest abschnittsweise durch eine im Bauteil 2 vorgesehene Durchbrechung 2' eingeführt oder hindurchgeführt und ist insbesondere gegen ein Auspressen aus dieser Durchbrechung 2' des Bauteils 2 entlang der z-Achse gesichert. Die Durchbrechung 2' ist beispielsweise durch eine Vorlochung oder eine entsprechende Bohrung oder Durchgangsbohrung im Bauteil 2 gebildet.

Unter einer schwimmenden Anordnung des Verbindungselementes 1 am Bauteil 2 wird im Sinne der Erfindung zumindest eine entlang Ebene E des Bauteils 2, d.h. in x- und/oder y-Richtung verschiebbare bzw. bewegliche Anbindung des Verbindungselementes 1 am Bauteil 2 verstanden. Zusätzlich kann auch zumindest eine geringfügige Verschiebbarkeit entlang der z-Achse vorgesehen sein. Durch die dadurch vorgegebene relative Beweg- bzw. Verschiebbarkeit des abschnittsweise durch die Durchbrechung 2' im Bauteil 2 geführten Verbindungselementes 1 ist in Bezug auf das Bauteil 2 ein Toleranzausgleich bei der Montage unter Verwendung des daran gehaltenen Verbindungselementes 1 möglich.

Das Verbindungselement 1 ist im vorliegenden Ausführungsbeispiel durch ein gewindetragendes Verbindungselement, insbesondere ein Mutterelement gebildet. Die Erfindung ist jedoch keinesfalls auf ein Mutterelement beschränkt, vielmehr können auch Schraubelemente oder Bolzenelemente schwimmend und verliergesichert im Bauteil 2 angeordnet werden. Die Schraubelemente oder Bolzenelemente können ebenfalls zumindest abschnittsweise eine Innen- und/oder Außengewinde umfassen.

Das Verbindungselement 1 erstreckt sich bei der in Figur 1 dargestellten Anordnung entlang der z-Achse, d.h. deren Längsachse LA verläuft im montierten Zustand näherungsweise senkrecht zur Ebene E des Bauteils 2, zumindest jedoch zur Ebene E des Montagebereiches des Bauteils 2. Ferner weist das Verbindungselement 1 zumindest einen Kopfabschnitt 1.1 und einen entlang der Längsachse LA daran anschließenden, gegenüber dem Kopfabschnitt 1.1 in Richtung der Längsachse LA zurückversetzten Schaftabschnitt 1.2 auf. Damit weisen die Rand- oder Mantelfläche des Kopfabschnittes 1.1 bzw. des Schaftabschnittes 1.2 in Bezug auf die Längsachse LA eine unterschiedliche radiale Erstreckung auf, um eine Durchführung des Kopfabschnittes 1.1 durch die Durchbrechung 2' im Bauteil 2 zu blockieren.

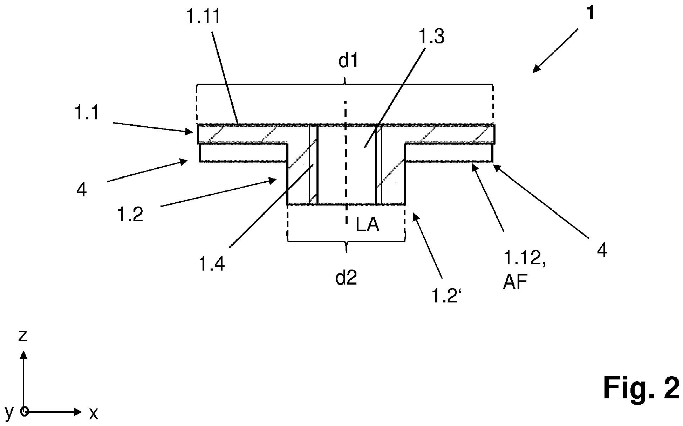

In Figur 2 ist beispielhaft ein schematischer Längsschnitt entlang der Längsachse LA durch ein als Mutterelement ausgebildetes Verbindungselement 1 dargestellt. Das

Verbindungselement bzw. Mutterelement 1 weist dabei eine sich beispielsweise entlang der Längsachse LA erstreckende Durchgangsbohrung 1.3 mit einem Innengewinde 1.4 auf, welche sich vorzugsweise konzentrisch zur Längsachse LA vollständig entlang des Kopfabschnittes 1.1 und des Schaftabschnittes 1.2 des Mutterelementes 1 erstreckt. Der Durchmesser d1 des Kopfabschnittes 1.1 überschreitet den Durchmesser d2 des Schaftabschnittes 1.2, so dass ein gestufter Übergang zwischen dem Kopf- und den Schaftabschnitt 1.1, 1.2 entsteht.

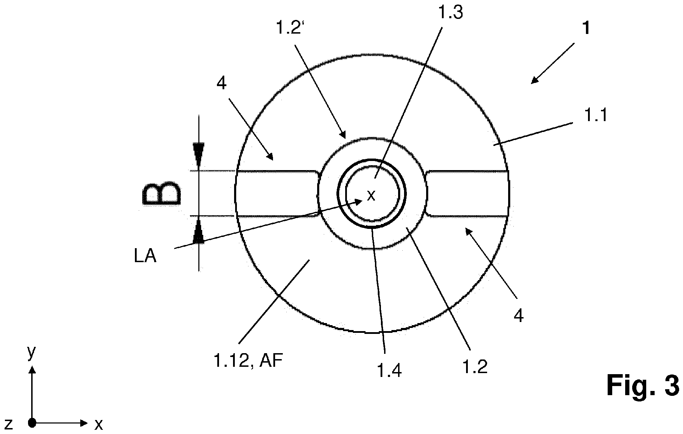

Der Kopfabschnitt 1.1 weist eine Oberseite 1.11 und eine im Wesentlichen ringförmige Unterseite 1.12 auf, welche zumindest abschnittsweise eine Anlagefläche AF ausbildet, welche vorzugsweise parallel zur Oberseite des Kopfabschnittes 1.1 und konzentrisch um die Längsachse LA verläuft. In Figur 3 ist beispielsweise eine schematische Ansicht der Unterseite des Verbindungs- bzw. Mutterelementes 1 gezeigt, aus der der Verlauf der Unterseite 1.12 bzw. Anlagefläche AF des Kopfabschnittes 1.1 in Bezug auf das freie Ende 1.2' des Schaftabschnittes 1.2 hervorgeht.

Zur schwimmenden und verliergesicherten Anordnung des Verbindungselementes 1 bzw. Mutterelementes am Bauteil 2 ist erfindungsgemäß ein Halteblechelement 3 vorgesehen, welches vorzugsweise aus einem metallischen Flachmaterial hergestellt ist. Das Halteblechelement 3 weist eine vorzugsweise im Zentrum des Halteblechelementes 3 angeordnete Durchbrechung 3' auf, deren Durchmesser d3 und/oder Querschnittsform zumindest abschnittsweise an den Durchmesser d2 und/oder die Querschnittsform zumindest des freien Endes 1.2' des Schaftabschnittes 1.2 des Verbindungselementes 1 angepasst ist.

Ferner ist das Halteblechelement 3, insbesondere im Hinblick auf dessen Außenabmessungen und/oder Außenkontur derart ausgebildet, dass eine Durchführung des mit dem mit dem freien Ende 1.2' des Schaftabschnittes 1.2 verbundenen Halteblechelementes 3 durch die Durchbrechung 2' des Bauteils 2 nicht möglich ist. Beispielsweise überschreiten die Außenabmessungen des Halteblechelementes 3 zumindest abschnittsweise den Durchmesser d4 der Durchbrechung 2' des Bauteils 2.

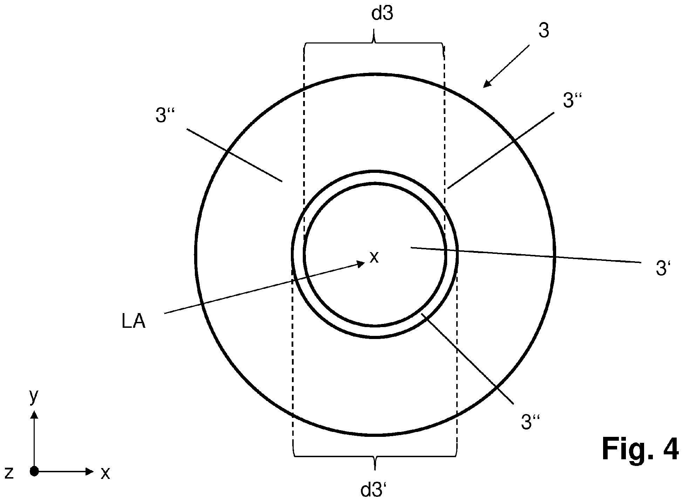

Figur 4 zeigt beispielhaft eine schematische Ansicht der Unterseite des in Figur 1 gezeigten Halteblechelementes 3. Im vorliegenden Ausführungsbeispiel ist das Halteblechelement 3 kreisscheibenförmig ausgebildet und weist eine kreisförmige Durchbrechung 3' auf, die hinsichtlich ihres Durchmessers d3 an den Durchmesser d2 des Schaftabschnittes 1.2 angepasst ist, und zwar derart, dass der Schaftabschnitt 1.2 mit seinen freien Ende 1.2' zumindest abschnittsweise in der Durchbrechung 3' des Halteblechelementes 3 aufgenommen ist. Es versteht sich, dass auch Durchbrechungen 3' mit unterschiedlichen, insbesondere polygonen Querschnittsformen Verwendung finden können. Ferner weist das Halteblechelement 3 in der vorliegenden Ausführungsvariante einen schräg zur Längsachse LA bzw. zur Unterseite des Halteblechelement 3 verlaufenden Übergangsabschnitt 3" auf, der sich zwischen der Innenseite der Durchbrechung 3' und der Unterseite des Halteblechelementes 3 erstreckt. Aufgrund des sich vom Durchmesser d3 der Durchbrechung 3' verbreiternden Durchmesser d3' bildet sich eine schräge Anlage- oder Abstützfläche aus. Diese kann beispielsweise ringförmig oder zumindest abschnittsweise teilringförmig ausgebildet sein.

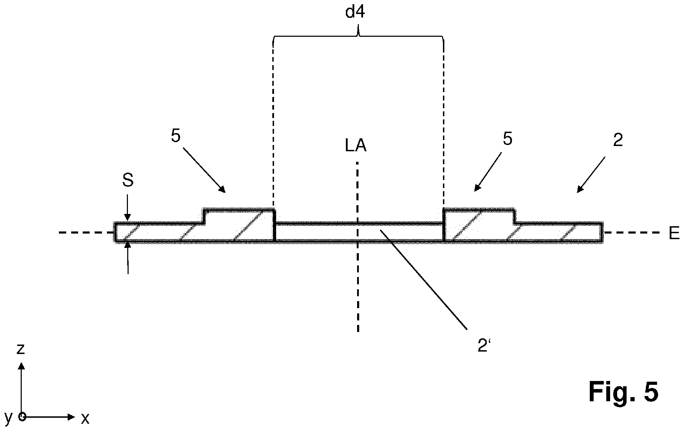

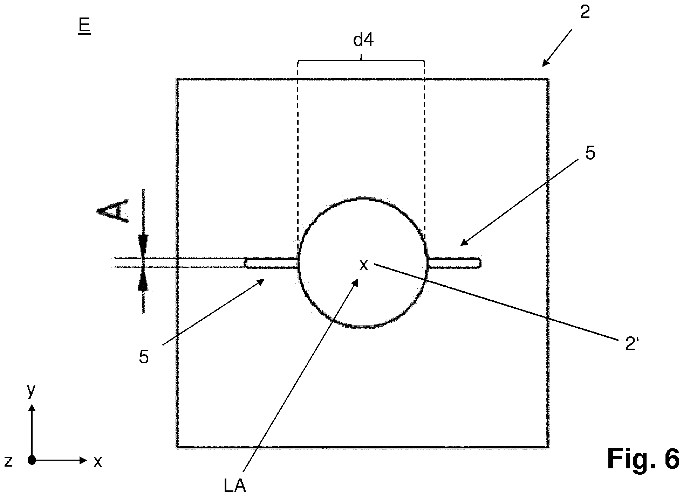

In Figur 5 ist beispielhaft ein schematischer Längsschnitt durch das Bauteil 2 gemäß der Figur 1 und in Figur 6 eine schematische Draufsicht auf diese Ausführungsvariante eines Bauteils 2 dargestellt, welches beispielsweise durch ein Metallblechteil gebildet sein kann und eine prinzipiell beliebige Außenkontur aufweisen kann. Im vorliegenden Ausführungsbeispiel weist das Bauteil bzw. Metallblechteil 2 eine Bauteilstärke S auf und ist in Draufsicht rechteckförmig oder quadratisch ausgebildet.

Wie in Figur 1 beispielhaft gezeigt ist der Schaftabschnitt 1.2 des Verbindungselementes 1 abschnittsweise durch die Durchbrechung 2' im Bauteil 2 geführt und zumindest im Bereich des dem Kopfabschnitt 1.1 gegenüberliegenden freien Ende 1.2' des Schaftabschnittes 1.2 mit dem Halteblechelement 3 derart verbunden, dass das als Mutterelement ausgebildete Verbindungselement 1 schwimmend und verliergesichert am Bauteil 2 angeordnet ist. Hierzu wird beispielsweise der Randbereich des freien Endes 1.2' des Schaftabschnittes 1.2 zumindest abschnittsweise plastisch nach außen verformt, so dass das Halteblechelement 3 im Bereich der Durchbrechung 3' kraft- und/oder formschlüssig mit dem freien Ende 1.2' des Schaftabschnittes 1.2 des Verbindungselementes 1 verbunden ist, insbesondere der plastisch verformte freie Randabschnitt am schräg verlaufenden Übergangsabschnitt 3" anliegt. Alternativ kann zur Verbindung eine Presspassung Verwendung finden. Auch kann das freie Ende 1.2' durch einen freien Nietbundabschnitt gebildet sein, der zur verliergesicherten Anbindung des Halteblechelementes 3 nach außen zumindest abschnittsweise radial verformbar ist.

Vorzugsweise ist das Halteblechelement 3 verschiebbar entlang der Längsachse LA am Schaftabschnitt 1.2 angeordnet, wobei besonders bevorzugt die Verbindung zwischen dem freien Ende 1.2' des Schaftabschnittes 1.2 und dem Halteblechelement 3 derart gewählt ist, dass die Stirnseite des freien Endes 1.2' des Schaftabschnittes 1.2 in Bezug auf die Unterseite des Halteblechelementes 3 zurückspringt, d.h. nicht über die Unterseite vorsteht. Dadurch ist die Einbringung einer Vorspannung bei Herstellung der Schraubverbindung möglich.

Erfindungsgemäß weisen der Kopfabschnitt 1.1 erste Verriegelungsmittel 4 und das Bauteil 2 korrespondierende, zweite Verriegelungsmitteln 5 auf, wobei die ersten Verriegelungsmittel 4 mit den im Bereich der Durchbrechung 2' des Bauteils 2 vorgesehenen, korrespondierenden zweiten Verriegelungsmitteln 5 derart zusammenwirken, dass das in der Durchbrechung 2' des Bauteils 2 zumindest abschnittsweise aufgenommene Verbindungselement 1 gegen ein zumindest abschnittsweises Verdrehen um die Längsachse LA in Bezug auf das Bauteil 2 gesichert ist. Damit ist das Verbindungselement 1 nicht nur schwimmend und verliergesichert, sondern auch zumindest teil- oder abschnittsweise verdrehgesichert im Bauteil 2 angeordnet bzw. in der Durchbrechung 2' des Bauteils 2 aufgenommen. Mit Ausnahme eines Schwimmbereiches X ist damit eine Verdrehsicherung gegeben.

Die ersten und zweiten Verriegelungsmittel 4, 5 sind vorzugsweise derart ausgebildet, dass diese in Wirkverbindung zueinander treten können, d.h. das zumindest ein Teil oder zumindest ein Abschnitt der ersten Verriegelungsmittels 4 mit zumindest einem Teil oder zumindest einem Abschnitt der zweiten Verriegelungsmittel 5 zur Anlage gelangt und damit wirksam ein Verdrehen des Verbindungselementes 1 in Bezug auf das Bauteil 2 über einen vorgegebenen Toleranz- oder Schwimmbereich X hinaus verhindert wird.

In der Ausführungsvariante gemäß der Figuren 1 bis 6 sind die ersten Verriegelungsmittel 4 beispielhaft durch nutförmige Ausnehmungen in der Anlagefläche AF bzw. in der Unterseite 1.12 des Kopfabschnittes 1.1 gebildet, welche eine Breite B aufweisen. Diese erstrecken sich beispielsweise vom Schaftabschnitt 1.2 radial nach außen bis zum Rand des Kopfabschnittes 1.1. Vorzugsweise sind zwei, einander gegenüberliegende nutförmige Ausnehmungen 4 vorgesehen, die beispielsweise eine Tiefe aufweisen, die näherungsweise die Hälfte der Breite des Kopfabschnittes 1.1 nicht überschreitet. Die nutförmigen Ausnehmungen 4 weisen vorzugweis eine U-förmige oder C-förmige Querschnittsform auf.

Die hierzu korrespondierenden zweiten Verriegelungsmittel 5 sind beispielsweise in Form von der Oberseite des Bauteils 2 in Richtung der Längsachse LA abstehende Stegabschnitte gebildet, welche vorzugsweise einstückig oder einteilig mit dem Bauteil 2 ausgebildet sind. Im vorliegenden Ausführungsbeispiel sind zwei in Bezug auf die Längsachse LA radial verlaufende Stegabschnitte 5 vorgesehen, welche hinsichtlich ihrer radialen Längserstreckung an die nutförmigen Ausnehmungen 4 angepasst sind, d.h. die radiale Länge der Stegabschnitte 5 ist vorzugsweise kleiner oder gleich der radialen Länge der nutförmigen Ausnehmungen 4 gewählt. Die Stegabschnitte 5 weisen ferner eine Breite A auf, welche kleiner als die Breite B der der nutförmigen Ausnehmungen 4 ist. Vorzugsweise sind die Breiten A, B derart gewählt, dass diese folgender Bedingung genügen:

$$B = A + X,$$

wobei mit X der vorgegebene Schwimmbereich der Drehverriegelung angegeben ist, d.h. das erste und zweite Verriegelungsmittel 4, 5 sind derart ausgebildet, dass ein Verdrehen um die Längsachse LA in dem vorgegebenen Schwimmbereich X noch freigegeben ist.

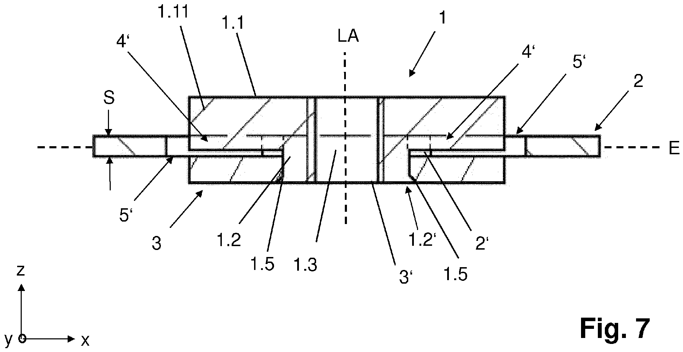

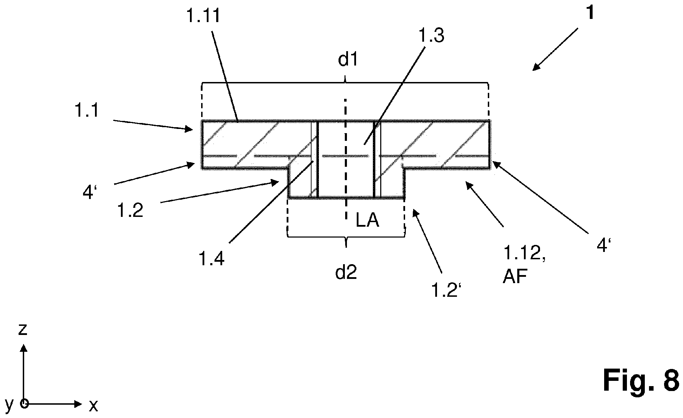

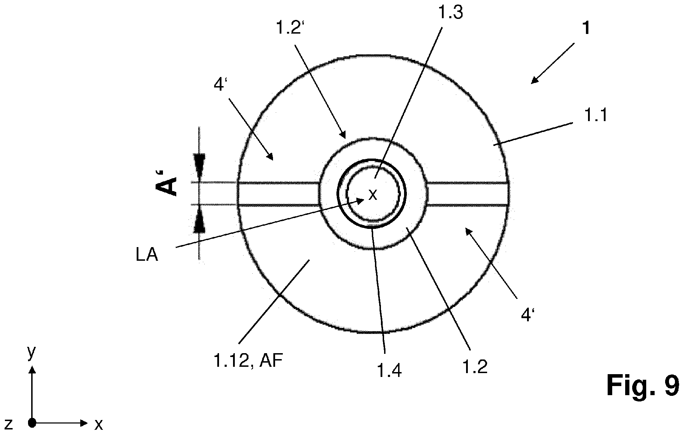

In einer alternativen Ausführungsvariante gemäß der Figuren 7 bis 11 sind die ersten Verriegelungsmittel 4 beispielhaft durch von der Unterseite 1.12 des Kopfabschnittes 1.1 in Richtung der Längsachse LA abstehende Stegabschnitte 4' gebildet, welche wiederum vorzugsweise einteilig oder einstückig mit dem Kopfabschnitt 1.1 bzw. mit Verbindungselement 1 ausgebildet sind. Diese verlaufen wiederum radial zur Längsachse LA und erstrecken sich vom Schaftabschnitt 1.2 bis zum Rand des Kopfabschnittes 1.1 auf dessen Unterseite 1.12. Diese Stegabschnitte 4' weisen eine Breite A' und sind vorzugsweise im Querschnitt rechteckförmig oder quadratisch ausgebildet. Zur Herstellung der Wirkverbindung sind analog dazu die korrespondierenden, zweiten Verriegelungsmittel 5 durch nutförmige Ausnehmungen 5' in der Oberseite des Bauteils 2 gebildet, welche eine Breite B' aufweisen und im Bereich der Durchbrechung 2' angeordnet sind.

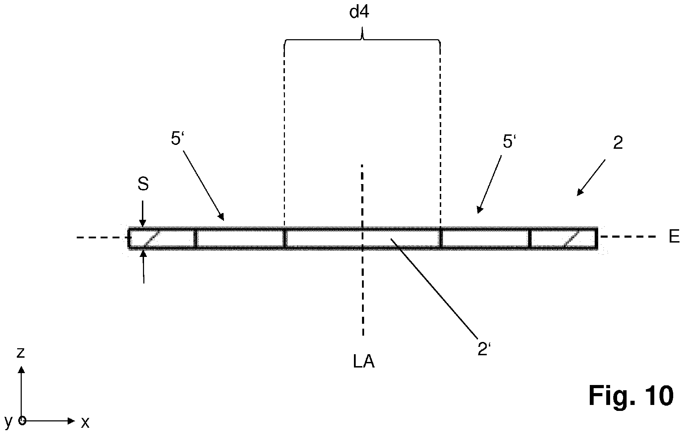

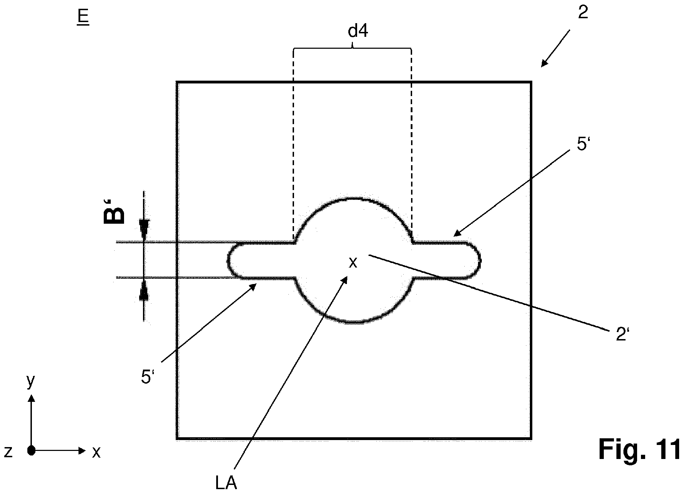

Bei der vorliegenden Ausführungsvariante gemäß Figur 10 und 11 erstrecken sind die nutförmigen Ausnehmungen 5' in die Durchbrechung 2' hinein, d.h. sind zur Durchbrechung 2' hin geöffnet ausgebildet, wobei das gegenüberliegende Ende der Ausnehmung 5' beispielsweise abgerundet ausgeführt sein kann. In einer bevorzugten, in den Figuren 10 und 11 dargestellten Ausführungsvariante erstrecken sich die nutförmigen Ausnehmungen 5' über die vollständige Stärke S des Bauteils 2, d.h. bilden damit nutförmige Durchbrechungen aus, die radial von der Durchbrechung 2' nach außen und vorzugsweise parallel zur Ebene E und entlang einer Geraden verlaufen.

Vorzugsweise sind wiederum zwei, einander gegenüberliegende Stegabschnitte 4' und nutförmige Ausnehmungen 5' vorgesehen, wobei die nutförmigen Ausnehmungen 5' vorzugweise eine U-förmige oder C-förmige Querschnittsform aufweisen. Die Stegabschnitte 4' sind hinsichtlich ihrer radialen Längserstreckung an die radiale Länge der nutförmigen Ausnehmungen 5' angepasst. Die Breiten A', B' sind hierbei derart gewählt, dass diese der Bedingungen genügen:

$$B' = A' + X,$$

wobei mit X der vorgegebene Schwimmbereich der Drehverriegelung angegeben ist, d.h. das erste und zweite Verriegelungsmittel 4', 5' sind derart ausgebildet, dass ein Verdrehen um die Längsachse LA in dem vorgegebenen Schwimmbereich X noch freigegeben ist.

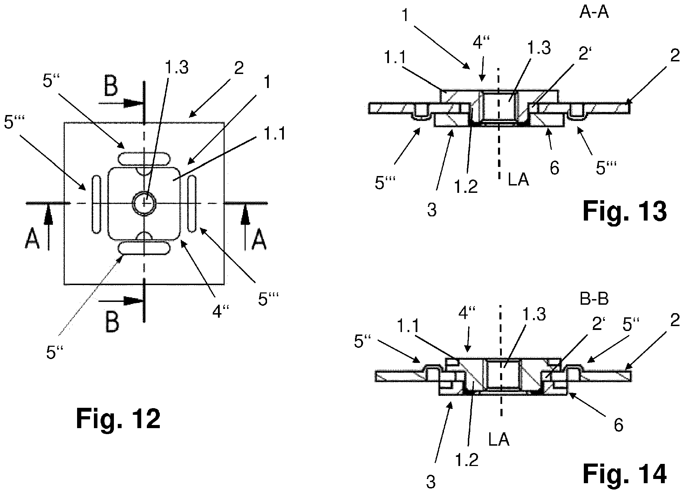

In einem weiteren Ausführungsbeispiel gemäß Figur 12 sind die ersten Verriegelungsmittel 4 des Kopfabschnittes 1.1 durch eine von der Kreisform abweichende Querschnittsform 4'' des Kopfabschnittes 1.1 bzw. zumindest einen Randabschnitt des Kopfabschnittes 1.1 gebildet, die im vorliegenden Ausführungsbeispiel eine quadratische Querschnittsform aufweisen. Die korrespondierenden zweiten Verriegelungsmittel 5 sind beispielsweise in Form von zumindest einem von der Oberseite des Bauteils 2 abstehenden Verriegelungssickenelementes 5'' realisiert, welche beispielsweise durch einen stegförmigen Vorsprung gebildet ist, der entlang der Längsachse LA von der Oberseite absteht und beispielsweise einen runden oder polygonen Querschnitt aufweist. Es ist zumindest ein Verriegelungssickenelement 5'' auf der Oberseite des Bauteils 2 vorgesehen, welcher parallel zum Rand des Kopfabschnittes 1.1 verläuft und welcher mit zumindest einem Randabschnitt des Kopfabschnittes 1.1 derart zusammenwirkt, dass der Randabschnitt zur abschnittsweisen Anlage an dem Verriegelungssickenelement 5'' gelangt und dadurch eine weitere Drehung des Verbindungselements 1 um die Längsachse LA verhindert wird.

Die zweiten Verriegelungsmittel 5 umfassen im vorliegenden Ausführungsbeispiel noch zumindest ein von der Unterseite des Bauteils 2 abstehendes Verriegelungssickenelement 5''', welches ebenfalls einen stegförmigen Vorsprung ausbildet, der entlang der Längsachse LA von der Unterseite absteht und beispielsweise einen runden oder polygonen Querschnitt aufweist.

Die von der Unterseite des Bauteils 2 abstehenden Verriegelungssickenelement 5''' wirken mit korrespondierende, dritten Verriegelungsmitteln 6 zusammen, welche am Halteblechelement 3 vorgesehen oder einstückig oder einteilig mit diesen ausgebildet sind. Im vorliegenden Ausführungsbeispiel sind die dritten Verriegelungsmittel durch die gewählte Querschnittsform des Halteblechelements 3 gebildet, welches vorliegende quadratisch oder rechteckförmig gewählt ist. In den Figuren 12 bis 14 ist eine Anordnung umfassend derartige erste bis dritte Verriegelungsmittel 4, 5, 6 beispielhaft dargestellt, bei der beispielhaft jeweils zwei parallel zueinander angeordnete von der Unter- bzw. Oberseite des Bauteils 2 abstehende Verriegelungssickenelemente 5", 5''' vorgesehen werden. Vorzugsweise sind die zwei von der Oberseite des Bauteils 2 abstehenden Verriegelungssickenelemente 5" und zwei von der Unterseite des Bauteils 2 abstehenden Verriegelungssickenelemente 5''' derart zur Durchbrechung 2' angeordnet, dass der Kopfabschnitt 1.1 bzw. das Halteblechelement 3 jeweils zwischen den beiden korrespondierenden Verriegelungssickenelementen 5", 5''' aufgenommen ist. Hierbei verlaufen die jeweiligen Kanten des Kopfabschnittes 1.1 bzw. des Halteblechelementes 3 parallel und beabstandet zu den zugeordneten korrespondierenden Verriegelungssickenelementen 5", 5''', so dass zwar eine schwimmende Anordnung des Verbindungselementes 1 am Bauteil 2 weiterhin gewährleistet ist, jedoch eine Verdrehsicherung des Verbindungselementes 1 gegenüber dem Bauteil 2 um die Längsachse LA gewährleistet ist.

Es versteht sich, dass auch nur dritte Verriegelungsmittel 6 am Halteblechelement 3 vorgesehen sein können, die mit den korrespondierenden zweiten Verriegelungsmitteln 5 zusammenwirken. Hierbei können die dritten Verriegelungsmittel 6 auch durch von der Oberseite des Halteblechelementes 2 abstehende nasenartige Vorsprünge oder Stegabschnitte bzw. in die Oberseite des Halteblechelementes 2 eingebrachte nut- oder kreisförmige Ausnehmungen gebildet sein, die mit den entsprechend ausgebildeten zweiten Verriegelungsmitteln 5 zusammenwirken

In einer weiteren Ausführungsvariante können die ersten Verriegelungsmittel 4 am Kopfabschnitt 1.1 durch in Richtung des Bauteils 2 und entlang der Längsachse LA von der Anlagefläche AF bzw. der Unterseite 1.12 abstehende nasenförmige Vorsprünge 4''' gebildet sein, welche mit korrespondierenden Verriegelungsausnehmungen 5"" auf der Oberseite des Bauteils 2 zusammenwirken. Die Verrieglungsausnehmungen 5"" bilden hierbei die korrespondierenden zweiten Verriegelungsmittel 5 aus.

Die Anzahl und der Durchmesser der Verriegelungsausnehmungen 5"" sind an die Anzahl und den jeweiligen Durchmessern der nasenförmigen Vorsprünge 4''' des Verbindungselementes 1 aneinander angepasst. Insbesondere ist Anordnung in Bezug auf die Längsachse LA und die Dimensionierung der Durchmesser der nasenförmigen Vorsprünge 4e bzw. zugehörigen Ausnehmungen derart gewählt, dass zusätzlich zur Verdrehsicherung eine schwimmende Anordnung des Verbindungselementes 1 am Bauteil 2 weiterhin gewährleistet bleibt.

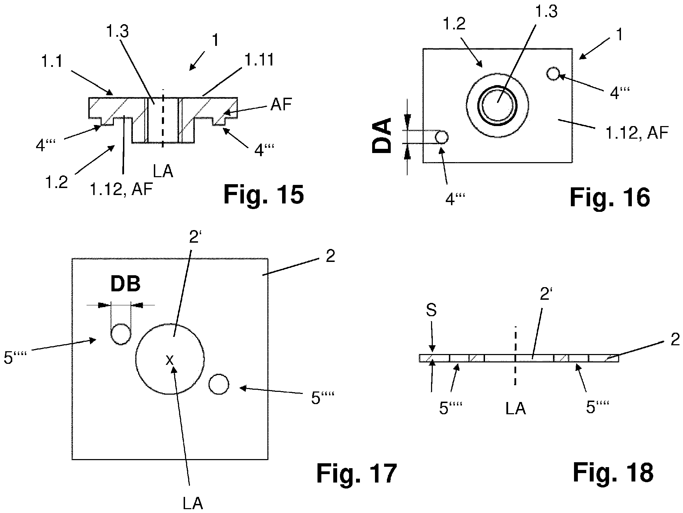

In Figur 15 ist beispielsweise ein schematischer Längsschnitt durch ein als Mutterelement ausgebildetes Verbindungselementes 1 dargestellt, bei dem zumindest ein nasenförmiger Vorsprung 4''' an der Anlagefläche AF bzw. Unterseite 1.12 des Kopfabschnittes 1.1 angeordnet ist, welcher die erfindungsgemäßen ersten Verriegelungsmittel 4 ausbilden. Der zumindest eine nasenförmige Vorsprung 4''' erstreckt sich entlang der Längsachse LA und ist vorzugsweise beabstandet zur Mantelfläche des Schaftabschnittes 1.2 angeordnet bzw. daran angeformt. Im vorliegenden Ausführungsbeispiel sind zwei, bezogen auf die Längsachse LA einander gegenüberliegend angeordnete nasenförmige Vorsprünge 4''' vorgesehen, welche beispielsweise einen kreisförmigen Querschnitt aufweisen. Figur 16 zeigt beispielhaft eine schematische Ansicht der Unterseite 1.12 des Verbindungselementes 1 gemäß der Figur 15.

Die nasenförmigen Vorsprünge 4''' bzw. ersten Verriegelungsmittel 4 wirken wiederum mit korrespondierenden, zweiten Verriegelungsmitteln 5 zusammen, die im vorliegenden Ausführungsbeispiel durch zumindest eine an die Querschnittsform und/oder den Durchmesser eines nasenförmigen Vorsprungs 4''' angepasste Ausnehmung 5"" gebildet sind. Die Ausnehmung 5"" ist in die Oberseite des Bauteils 2 im Bereich der Durchbrechung 2' eingebracht und erstreckt sich zumindest teilweise über die Stärke S des Bauteils 2. In Figur 17 ist beispielhaft eine Draufsicht auf die Oberseite des Bauteils 2 und in Figur 18 ein schematischer Schnitt durch die Längsachse LA und die einander gegenüberliegenden Ausnehmung 5"" dargestellt. Dabei sind zwei Ausnehmungen 5"" vorgesehen, welche hinsichtlich Form und Positionierung in Bezug auf die Längsachse LA an die Anordnung der nasenförmigen Vorsprünge 4''' angepasst sind. Bevorzugt erstrecken sich die Ausnehmungen 5"" über die komplette Stärke S des Bauteils und bilden somit Durchbrechungen durch das Bauteil 2 aus.

Die nasenförmigen Vorsprünge 4''' sind beispielsweise stabförmig, insbesondere zylinderförmig ausgebildet. Prinzipiell sind jedoch beliebigste Formen möglich, welche ein zumindest abschnittsweises Abstützen in den korrespondierenden Ausnehmungen 5"" im Bauteil 2 zur Erzeugung einer Verdrehsicherung ermöglichen.

Die nasenförmigen Vorsprünge 4''' sind beispielsweise kreisförmig mit einem Durchmesser DA ausgebildet, wohingegen die korrespondierenden ebenfalls kreisförmigen Ausnehmungen einen Durchmesser DB aufweisen und zur Bereitstellung eines Schwimmbereiches X der Bedingung genügen:

$$DB = DA + X$$

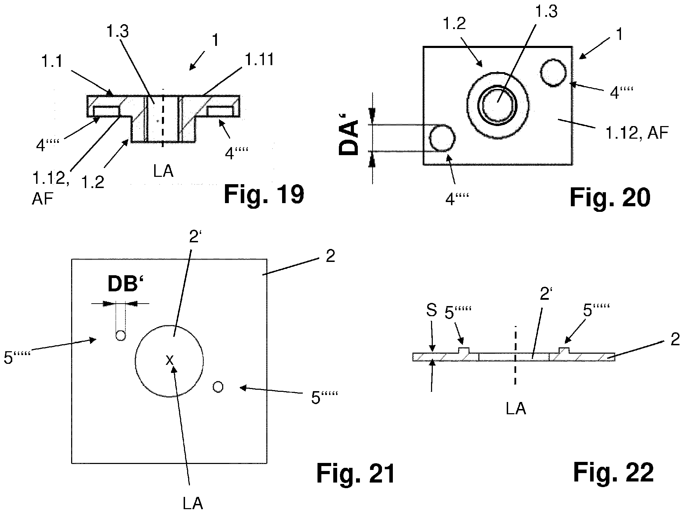

In den Figuren 19 bis 22 ist eine Ausführungsvariante dargestellt, bei der die ersten und zweiten Verriegelungsmittel 4, 5 gespiegelt ausgebildet sind, und zwar sind die ersten Verriegelungsmittel 4 als Ausnehmung 4"" realisiert und die korrespondierenden zweiten Verriegelungsmittel 5 durch nasenförmige Vorsprünge 5"''' gebildet. Die Ausnehmung 4"" weisen dabei einen Durchmesser DA' und die nasenförmigen Vorsprünge 5'''' einen Durchmesser DB' auf, so auch hier zur Bereitstellung eines Schwimmbereiches X die Durchmesser DA' und DB' folgender Bedingung genügen:

$$DA' = DB' + X$$

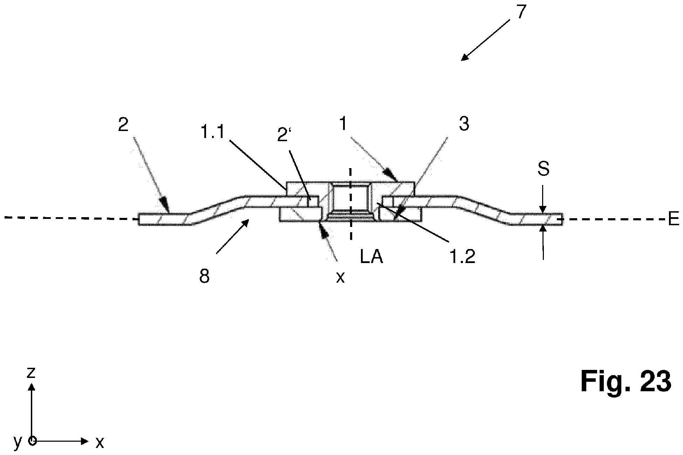

In einer weiteren Ausführungsvariante können die erfindungsgemäß schwimmende und verliergesicherte Anordnung eines Verbindungselementes 1 an einem Bauteil 2 eine vorgefertigte Baugruppe 7 bzw. einen Vorzusammenbau bilden. In Figur 23 ist beispielhaft ein schematischer Längsschnitt durch eine derartige Baugruppe 7 dargestellt. Der Montage- oder Anbindungsbereich befindet sich hierbei in einer flächigen Sicke 8 im Bauteil 2, wodurch der Montagebereich zur Ebene E des Bauteils 2 parallel versetzt ist, und zwar derart, dass darin das Halteblechelement 3 aufgenommen ist. Die Sicke 8 wird vor dem Einbringen des Verbindungselementes 1 in die Durchbrechung 2' in das Bauteil 2 eingebracht. Durch die versenkte Anordnung des Halteblechelementes 3 in der im Bauteil 2 vorgeformten Sicke 8 wird ein Übergleiten des beispielsweise als Mutterelement ausgebildeten Verbindungselementes 1 effektiv verhindert.

Eine derartige Baugruppe 7 kann abhängig vom Einsatzzweck und -ort mit einem weiteren Bauteil 9 verbunden werden, welches ebenfalls eine Durchbrechung 9' aufweist, welche vorzugsweise im montierten Zustand mit der Durchbrechung 2' des Bauteils 2 in Flucht angeordnet ist. Das weitere Bauteil 9 erstreckt sich zumindest im Verbindungsbereich entlang der Ebene E und die die Sicke 8 einschließenden Randbereiche des Bauteils 2 liegen an dem weiteren Bauteil 9 an. Die Baugruppe 7 wird vorzugsweise auf das weitere Bauteil 9 gefügt, und zwar beispielsweise mittels Schweißen, Kleben, Stanznieten, Blindnieten oder Durchsetzfügen.

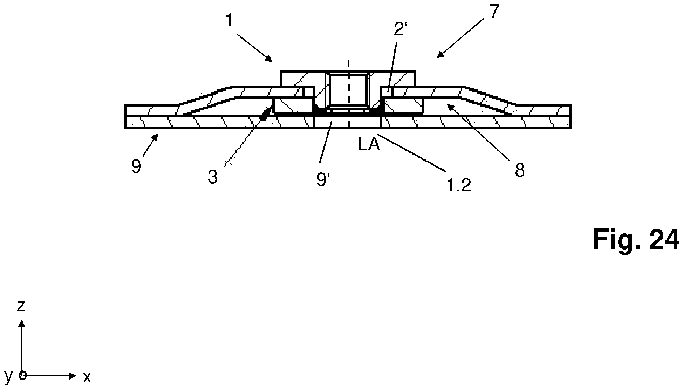

In Figuren 24 ist beispielsweise eine Ausführungsvariante einer an ein weiteres Bauteil 9 gefügten Baugruppe 7 dargestellt. Bei der dargestellten Varianten ist weiterhin eine schwimmende und verliergesicherte Anordnung des Verbindungselementes 1 gewährleistet, da das Halteblechelement 3 in der Sicke 8 zwischen beiden Bauteilen 2, 9 aufgenommen ist.

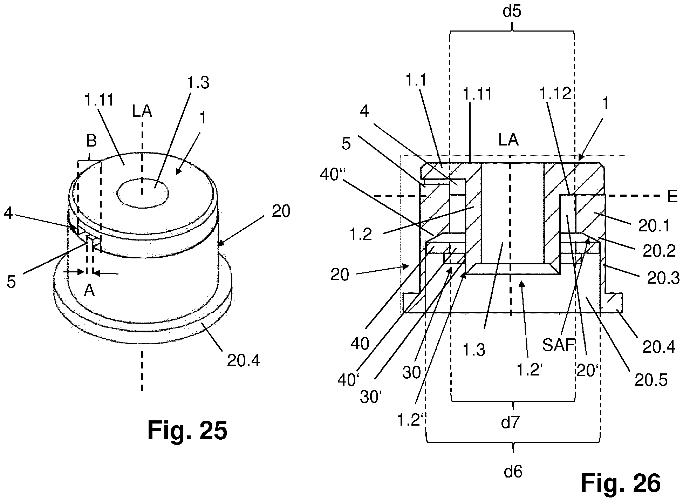

In den Figuren 25 und 26 ist eine weitere Ausführungsvariante der erfindungsgemäßen schwimmenden und verliergesicherten Anordnung eines Verbindungselements 1 an einem Bauteil 2 dargestellt, bei der das Bauteil 2 durch ein Blindnietelement 20 gebildet ist. Das Blindnietelement 20 ist zur Montage an einem aus einem Flachmaterial hergestellten Bauteil vorgesehen und wird hierzu montageseitig in eine Vorlochung im Bauteil eingeführt und anschließend mittels eines Zugelementes eine Nietverbindung zwischen dem Blindnietelement 20 und dem Bauteil hergestellt.

Das Blindnietelement 20 erstreckt sich ebenfalls entlang der Längsachse LA und weist zumindest einen ringförmigen Halteabschnitt 20.1 auf, der eine Durchbrechung 20' aufweist. An den ringförmiger Halteabschnitt 20.1 schließt sich entlang der Längsachse LA ein Anlageabschnitt 20.2 an, der eine schräg zur Längsachse LA verlaufende ringförmige Innenanlagefläche SAF ausbildet. Die Durchbrechung 20' weitet sich im Anlageabschnitt 20.2 radial entlang der Längsachse LA auf. Dem ringförmigen Anlageabschnitt 20.2 folgt entlang der Längsachse LA ein Nietschaftabschnitt 20.3 und ein unmittelbar daran anschließender Nietflansch 20.4, welche einen vorzugsweise zylinderförmigen Hohlnietraum 20.5 einschließen. Zur Herstellung einer Nietverbindung ist der Nietschaftabschnitt 20.3 in einen Nietbund verformbar, und zwar durch Einbringen eines Zugelementes in das Verbindungselement 1 und entsprechendes Einleiten einer Zugkraft über das Verbindungselement 1 in den ringförmigen Halteabschnitt 20.1 und den Anlageabschnitt 20.2 entlang der Längsachse LA, und zwar derart, dass sich der Nietschaftabschnitt 20.3 radial nach außen verformt und durch entsprechenden Umbördeln einen Nietbund formt. Nach Herstellung der Nietverbindung ist das Bauteil zwischen dem geformten Nietbund und dem Nietflansch 20.4 aufgenommen, vorzugsweise eingeklemmt.

Zur schwimmenden und verliergesicherten Anordnung des Verbindungselementes 1 im Blindnietelement 20 ist der Schaftabschnitt 1.2 des Verbindungselementes 1 durch die Durchbrechung 20' in das Blindnietelement 20 eingeführt und erstreckt sich mit seinem freienden Ende 1.2' über den Anlageabschnitt 20.2 zumindest abschnittsweise in den Hohlnietraum 20.5 hinein, und zwar in den Bereich des Nietschaftabschnittes 20.3. Der Durchmesser d5 der Durchbrechung überschreitet hierbei deutlich den Durchmesser d2 des Schaftabschnittes 1.2 des Verbindungselementes 1, so dass ein Toleranzausgleich in x-/y-Richtung des im Blindnietelement 20 aufgenommenen Verbindungselementes 1 möglich ist. Der Durchmesser d5 der Durchbrechung 20' beträgt beispielsweise zwischen 10 mm und 14 mm, wobei der Durchmesser d2 des Schaftabschnittes 1.2 des Verbindungselementes 1 in diesem Fall beispielsweise zwischen 8 mm und 10 mm beträgt. Vorzugsweise ergibt sich damit ein Schwimmbereich X von 2 mm bis 4 mm. Der Durchmesser d5 der Durchbrechung 20' erweitert sich über den Anlageabschnitt 20.2 auf den Durchmesser d6 des vorzugsweise zylinderförmigen Hohlnietraumes 20.5, welcher beispielsweise zwischen 14 mm und 18 mm beträgt.

Erfindungsgemäß ist im Bereich des freien Endes 1.2' des Verbindungselementes 1 ein Halteblechelement 30 mit einer Durchbrechung 30' vorgesehen, die an den Durchmesser d2 des Schaftabschnittes 1.2 wie zuvor beschrieben angepasst ist. Im dargestellten Ausführungsbeispiel weist der Schaftabschnitt 1.2 des Verbindungselementes 1 freiendseitig einen vorzugsweise ringförmigen Nietbundabschnitt 1.2", dessen Wandstärke radial abnimmt, und zwar bezogen auf die Längsachse LA von innen nach radial außen, d.h. das durch den Nietbundabschnitt 1.2" gebildete freie Ende 1.2' des Schaftabschnittes läuft im Querschnitt spitz zu. Zur Verliersicherung des in das Blindnietelementes 20 eingeführten Verbindungselementes 1 ist der Nietbundabschnitt 1.2" radial nach außen verformbar und überschreitet damit den Durchmesser der Durchbrechung 30' des Halteblechelementes 30, d.h. das Verbindungselement 1 ist gegen ein Herausfallen oder Herausdrücken aus dem Blindnietelement 20 gesichert. Hierbei ist ein leichtes radiales Ausdehnen des Nietbundabschnitt 1.2" nach außen mittels eines geeigneten Formwerkzeuges bereits ausreichend, um ein Abrutschen des Halteblechelements 30 vom Schaftabschnitt 1.2 zu verhindern.

Hierbei ist das Halteblechelement 30 zwischen dem Anlageabschnitt 20.2 und dem umgebördelten freien Nietbundabschnitt 1.2" aufgenommen, wobei der Außendurchmesser des Halteblechelement 30 hinsichtlich Form und Querschnitt an die Abmessungen und/oder Querschnittsform des vorzugsweise zylinderförmigen Hohlnietraumes 20.5 angepasst, und zwar derart, dass das Halteblechelement 30 entlang der Längsachse LA in den Hohlnietraum 20.5 über die vom Nietflansch 20.4 stirnseitige Öffnung des Hohlnietraum 20.5 einführbar ist.

Zur Vergrößerung des Schwimmbereiches X der Anordnung ist ein Anlageblechelement 40 mit einer Durchbrechung 40' zwischen dem Halteblechelement 30 und dem Anlageabschnitt 20.2 vorgesehen, welches eine an den schrägen Verlauf der Anlagefläche SAF des Anlageabschnittes 20.2 angepasste oberseitige Randabschrägung 40" aufweist, welche vorzugsweise ringförmig ausgebildet ist und flächig an der Anlagefläche SAF des Anlageabschnittes 20.2 anliegt. Der Durchmesser d7 der Durchbrechung 40' des Anlageblechelementes 40 entspricht hierbei näherungsweise dem Durchmesser der Durchgangsbohrung 20' des Blindnietelementes 20, so dass sich die Durchgangsbohrung 20' in der Durchbrechung 40' des Anlageblechelementes 40 vorsetzt. Die der Randabschrägung 40" gegenüberliegende Unterseite des Anlageblechelementes 40 ist eben oder flach ausgebildet und bildet eine ebene bzw. flache Anlagefläche für das daran unmittelbar anliegende Halteblechelement 30 aus, so dass trotz Verliersicherung des Verbindungselementes 1 weiterhin der durch die Abmessungen des Schaftabschnittes 1.2 und der Durchbrechung 20' des Blindnietelementes 20 vorgegebenen Schwimmbereich X weiterhin zur Verfügung steht.

Analog zu den Ausführungsvarianten gemäß der Figuren 1 bis 6 sind auch bei der Ausführungsvariante gemäß der Figuren 25 und 26 die ersten Verriegelungsmittel 4 beispielshaft durch zumindest eine nutförmige Ausnehmung in der Unterseite 1.12 des Kopfabschnittes 1.1 gebildet, welche eine Breite B aufweist. Diese erstreckt sich beispielsweise vom Schaftabschnitt 1.2 radial nach außen bis zum Rand des Kopfabschnittes 1.1. Die nutförmige Ausnehmungen 4 weist vorzugsweise einen U-förmigen oder C-förmigen Querschnitt und eine Tiefe auf, die näherungsweise die Hälfte der Breite des Kopfabschnittes 1.1 nicht überschreitet.

Die hierzu korrespondierenden zweiten Verriegelungsmittel 5 sind beispielsweise in Form zumindest eines von der Oberseite des Blindnietelementes 20 bzw. der Stirnseite dessen ringförmigen Halteabschnittes 20.1 in Richtung der Längsachse LA abstehenden Stegabschnittes gebildet, welcher vorzugsweise einstückig oder einteilig mit dem Blindnietelementes 20 ausgebildet ist. Im vorliegenden Ausführungsbeispiel ist ein in Bezug auf die Längsachse LA radial verlaufender Stegabschnitte 5 vorgesehen, welche hinsichtlich ihrer radialen Längserstreckung an die nutförmigen Ausnehmungen 4 angepasst sind, d.h. die radiale Länge des Stegabschnittes 5 ist vorzugsweise kleiner als die radiale Länge der nutförmigen Ausnehmungen 4 gewählt. Der Stegabschnitt 5 weist ferner eine Breite A auf, welche kleiner als die Breite B der nutförmigen Ausnehmung 4 ist. Vorzugsweise sind die Breiten A, B derart gewählt, dass diese wiederum folgender Bedingung genügen:

$$B = A + X$$

Das Verbindungselement 1 ist damit erfindungsgemäß schwimmend, verliergesichert und verdrehgesichert im bzw. am Blindnietelement 20 angeordnet und kann entsprechend auch als vorgefertigte Baugruppe weiterverarbeitet werden. Es versteht sich, dass auch die bereits für ein aus einen Flachmaterial hergestelltes Bauteil 2 beschriebenen Ausführungsvarianten der ersten und zweiten Verriegelungsmittel 4, 5 auch bei einem durch ein Blindnietelement 20 gebildetes Bauteil 2 Verwendung finden können.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

**Bezugszeichenliste**

| 1 | Verbindungselement, insbesondere Mutterelement |
|---|---|
| 1.1 | Kopfabschnitt |
| 1.11 | Oberseite |
| 1.12 | Unterseite |
| 1.2 | Schaftabschnitt |
| 1.2' | freies Ende |
| 1.2" | freien Nietbundabschnitt |
| 1.3 | Durchgangsbohrung |
| 1.4 | Innengewinde |
| 1.5 | abstehende Materialvorsprünge |
| | |
| 2 | Bauteil |
| 2' | Durchbrechung |

| | |
|---|---|
| 3 | Halteblechelement |
| 3' | Durchbrechung |
| 3" | Übergangsabschnitt |
| 4 | erste Verriegelungsmittel bzw. nutförmige Ausnehmung |
| 4' | Stegabschnitte |
| 4" | Querschnittsform Kopfabschnitt |
| 4''' | nasenförmige Vorsprünge |
| 4'''' | kreisförmige Verriegelungsausnehmungen |
| 5 | korrespondierende, zweite Verriegelungsmittel bzw. Stegabschnitt |
| 5' | nutförmige Ausnehmung |
| 5" | Verriegelungssicken |
| 5''' | Verriegelungssicken |
| 5'''' | kreisförmige Verriegelungsausnehmungen |
| 5''''' | nasenförmige Vorsprünge |
| 6 | dritte Verriegelungsmittel |
| 7 | vorgefertigte Baugruppe |
| 8 | Sicke |
| 9 | weiteres Bauteil |
| 9' | Durchbrechung |
| 20 | Blindnietelement |
| 20' | Durchbrechung |
| 20.1 | Halteabschnitt |
| 20.2 | Anlageabschnitt |
| 20.3 | Nietschaftabschnitt |
| 20.4 | Nietflansch |
| 20.5 | Hohlnietraum |
| 30 | Anlageblechelement |
| 30' | Durchbrechung |
| 40 | Anlageblechelement |
| 40' | Durchbrechung |
| 40" | Randabschrägung |
| A, A' | Breite |
| B. B' | Breite |
| AF | Anlagefläche |
| DA, DA' | Durchmesser |
| DB, DB' | Durchmesser |
| d1 | Durchmesser Kopfabschnitt |
| d2 | Durchmesser Schaftabschnitt |
| d3 | Durchmesser Durchbrechung Halteblechelement |
| d3' | Durchmesser Übergangsabschnitt |
| d4 | Durchmesser Durchbrechung Bauteil |
| d5 | Durchmesser Durchbrechung Blindnietelement |
| d6 | Durchmesser Hohlnietraum |
| d7 | Durchmesser Durchbrechung Anlageblechelement |
| E | Ebene des Bauteils |
| LA | Längsachse |
| S | Bauteilstärke |
| SAF | Anlagefläche |
| X | Schwimmbereich |

**Patentansprüche**

1. Schwimmende, verliergesicherte Anordnung eines Verbindungselements (1) an einem Bauteil (2), bei der das Verbindungselement (1) sich entlang einer Längsachse (LA) erstreckt und zumindest einen Kopfabschnitt (1.1) und einen daran entlang der Längsachse (LA) anschließenden, gegenüber dem Kopfabschnitt (1.1) zurückversetzten Schaftabschnitt (1.2) aufweist, bei der der Schaftabschnitt (1.2) zumindest abschnittsweise durch eine Durchbrechung (2') im Bauteil (2) geführt ist und zumindest im Bereich des dem Kopfabschnitt (1.1) gegenüberliegenden freien Ende (1.2') des Schaftabschnittes (1.2) mit einem Halteblechelement (3) derart verbunden ist, dass das Verbindungselement (1) schwimmend und verliergesichert am Bauteil (2) angeordnet ist, wobei der Kopfabschnitt (1.1) erste Verriegelungsmittel (4, 4', 4", 4''') und/oder das Halteblechelement (3) dritte Verriegelungsmittel (6) und das Bauteil (2) jeweils korrespondierende, zweite Verriegelungsmittel (5, 5', 5", 5'''', 5''''') aufweisen, wobei die ersten Verriegelungsmitteln (4, 4', 4", 4''') und/oder dritten Verriegelungsmittel (6) mit den zweiten Verriegelungsmittel (5, 5', 5", 5'''', 5''''') derart zusammenwirken, dass das in der Durchbrechung (2') des Bauteils (2) zumindest abschnittsweise aufgenommene Verbindungselement (1) gegen ein zumindest abschnittsweises Verdrehen um die Längsachse (LA) in Bezug auf das Bauteil (2) gesichert ist.

2. Anordnung nach Anspruch 1, **dadurch gekennzeichnet, dass** die ersten, zweiten und dritten Verriegelungsmittel (4, 4', 4", 4''' 5, 5', 5", 5'''', 5''''' 6) im Bereich der Durchbrechung (2') des Bauteils (2) angeordnet sind und/oder dass die ersten, zweiten und dritten Verriegelungsmittel (4, 4', 4", 4''' 5, 5', 5", 5'''', 5''''' 6) derart ausgebildet sind, dass zumindest ein Teil oder zumindest ein Abschnitt der ersten und/oder dritten Verriegelungsmittel (4, 4', 4", 4''') mit zumindest einem Teil oder zumindest einem Abschnitt der zweiten Verriegelungsmittel (5, 5', 5", 5'''', 5''''') beim Drehen des Verbindungselementes (1) zur Anlage gelangt.

3. Anordnung nach Anspruch 1 oder 2, **dadurch gekennzeichnet, dass** das Bauteil (2) zwischen dem Kopfabschnitt (1.1) des Verbindungselementes (1) und dem Halteblechelement (3) aufgenommen ist und/oder dass das aus einem Flachmaterial hergestellte Halteblechelement (3) eine Durchbrechung (3') aufweist, dessen Durchmesser (d3) und/oder Querschnittsform zumindest abschnittsweise an den Durchmesser (d2) und/oder die Querschnittsform des Schaftabschnittes (1.2) des Verbindungselementes (1) im Bereich des freien Endes (1.2') angepasst ist.

4. Anordnung nach Anspruch 3, **dadurch gekennzeichnet, dass** das Halteblechelement (3) verliergesichert mit dem freien Ende (1.2') des Schaftabschnittes (1.2) des Verbindungselementes (1) verbunden ist und/oder dass das Halteblechelement (3) gegen ein zumindest abschnittsweises Verdrehen um die Längsachse (LA) des Verbindungselementes (1) am freien Ende (1.2') des Schaftabschnittes (1.2) des Verbindungselementes (1) gesichert ist.

5. Anordnung nach Anspruch 3 oder 4, **dadurch gekennzeichnet, dass** Halteblechelement (3) verschiebbar entlang der Längsachse (LA) am Schaftabschnitt (1.2) des Verbindungselementes (1) angeordnet ist und/oder dass das freie Ende (1.2) des Schaftabschnittes (1.2) derart in der Durchbrechung (3') des Halteblechelementes (3) aufgenommen ist, dass das freie Ende (1.2) von der Unterseite des Halteblechelementes (3) in die Durchbrechung (3") zurückspringt.

6. Anordnung nach einem der vorhergehenden Ansprüche, **dadurch gekennzeichnet, dass** das Halteblechelement (3) eine Außenkontur und/oder Außenabmessungen aufweist, die eine Durchführung des Halteblechelementes (3) durch die Durchbrechung (2') des Bauteils (2) sperren.

7. Anordnung nach einem der vorhergehenden Ansprüche, **dadurch gekennzeichnet, dass** die ersten Verriegelungsmittel von zumindest einer in die Unterseite (1.1) des Kopfabschnittes (1.1) eingebrachte, nutförmige Ausnehmung (4) und die korrespondierenden, zweiten Verriegelungsmittel von zumindest einem von der Oberseite des Bauteils (2) in Richtung der Längsachse (LA) abstehenden Stegabschnitt (5) gebildet sind und/oder dass die ersten Verriegelungsmittel von zumindest einer von der Unterseite (1.1) des Kopfabschnittes (1.1) abstehenden Stegabschnitt (4') und die korrespondierenden, zweiten Verriegelungsmittel von zumindest einer in die Oberseite des Bauteils (2) eingebrachten, nutförmigen Ausnehmung (5') gebildet sind.

8. Anordnung nach Anspruch 7, **dadurch gekennzeichnet, dass** die nutförmige Ausnehmung (4, 5') eine U-förmige oder C-förmige Querschnittsform aufweist und/oder die zumindest eine nutförmige Ausnehmung (4 ,5') und der zumindest eine Stegabschnitt (4', 5) sich radial zur Längsachse (LA) erstrecken, wobei der zumindest eine Stegabschnitt (4', 5) hinsichtlich der radialen Längserstreckung an radiale Längserstreckung der nutförmigen Ausnehmung (4, 5') angepasst ist.

9. Anordnung nach Anspruch 7 oder 8, **dadurch gekennzeichnet, dass** die Stegabschnitte (4', 5) eine Breite (A, A') aufweisen, die kleiner als die Breite (B, B') der nutförmigen Ausnehmungen (4, 5') ist und/oder dass die ersten und zweiten Verriegelungsmittel jeweils durch zumindest zwei nutförmige Ausnehmung (4 ,5') oder zumindest zwei Stegabschnitte (4', 5) gebildet sind.

10. Anordnung nach einem der Ansprüche 1 bis 9, **dadurch gekennzeichnet, dass** die ersten Verriegelungsmittel von zumindest einem von der Unterseite (1.12) des Kopfabschnittes (1.1) abstehenden nasenförmigen Vorsprung (4''') und die korrespondierenden, zweiten Verriegelungsmittel von zumindest einer in die Oberseite des Bauteils (2) eingebrachte, kreisförmige Verriegelungsausnehmung (5'''') gebildet sind.

11. Anordnung nach einem der Ansprüche 1 bis 6, **dadurch gekennzeichnet, dass** die ersten Verriegelungsmittel von zumindest einer in die Unterseite (1.12) des Kopfabschnittes (1.1) eingebrachten kreisförmigen Verriegelungsausnehmung (4'''') und die korrespondierenden, zweiten Verriegelungsmittel von zumindest einem von der Oberseite des Bauteils (2) abstehenden nasenförmigen Vorsprung (5'''') gebildet sind.

12. Anordnung nach Anspruch 10 oder 11, **dadurch gekennzeichnet, dass** die kreisförmige Verriegelungsausnehmung (4'''', 5'''') und die nasenförmigen Vorsprünge (4''' 5''') hinsichtlich Anzahl, Form und/oder Positionierung in Bezug auf die Längsachse (LA) zueinander angepasst sind.

13. Anordnung nach einem der Ansprüche 1 bis 6, **dadurch gekennzeichnet, dass** die ersten Verriegelungsmittel (4) durch eine von der Kreisform abweichende Querschnittsform (4") des Kopfabschnittes (1.1) oder zumindest einem Kantenabschnitt des Kopfabschnittes (1.1) gebildet sind, wobei die korrespondierenden zweiten Verriegelungsmittel durch zumindest ein, vorzugsweise mehrere Verriegelungssickenelemente (5") gebildet sind, die von der Oberseite des Bauteils (2) abstehen.

14. Anordnung nach Anspruch 13, **dadurch gekennzeichnet, dass** die dritten Verriegelungsmittel (6) durch eine von der Kreisform abweichende Querschnittsform des Halteblechelementes (3) oder zumindest einem Kantenabschnitt des Halteblechelementes (3) gebildet sind, die mit korrespondierenden zweiten Verriegelungsmittel zusammenwirken, die durch zumindest ein, vorzugsweise mehrere Verriegelungssickenelemente (5''') gebildet sind, die von der Unterseite des Bauteils (2) abstehen.

15. Anordnung nach einem der vorhergehenden Ansprüche, **dadurch gekennzeichnet, dass** die Verriegelungssickenelemente (5'', 5''') in das das Bauteil (2) bildende Flachmaterial eingeformt sind.

16. Anordnung nach Anspruch 1 oder 12, **dadurch gekennzeichnet, dass** die dritten Verriegelungsmittel (6) durch zumindest einen von der Oberseite des Halteblechelementes (3) abstehenden nasenförmigen Vorsprung und/oder einen Stegabschnitt gebildet sind, der mit dem korrespondierenden zweiten Verriegelungsmittel (5) in Form von Ausnehmungen zusammenwirkt und/oder dass die dritten Verriegelungsmittel (6) durch zumindest eine in die Oberseite des Halteblechelementes (3) eingebrachte Ausnehmung gebildet ist, die mit korrespondierenden zweiten Verriegelungsmittel (5) in Form von einem von der Unterseite des Bauteils abstehenden nasenförmigen Vorsprung und/oder Stegabschnitt zusammenwirkt.

17. Anordnung nach einem der vorhergehenden Ansprüche, **dadurch gekennzeichnet, dass** das Verbindungselement (1) als gewindetragendes Verbindungselement, insbesondere als ein Mutterelement oder ein Bolzenelement oder ein Schraubelement ausgebildet ist und/oder dass die Durchbrechung (2') im Bauteil (2) und/oder die Durchbrechung (3') im Halteblechelement (3) durch eine Vorlochung oder eine Bohrung gebildet ist.

18. Anordnung nach einem der vorhergehenden Ansprüche, **dadurch gekennzeichnet, dass** das Bauteil (2) durch ein Blindnietelement (20) mit einer Durchbrechung (20') umfassend einen Halteabschnitt (20.1), einen Anlageabschnitt (20.2), einen Nietschaftabschnitt (20.3) und einen Nietflansch (20.4), welche entlang der Längsachse (LA) aneinander anschließen.

19. Anordnung nach Anspruch 18, **dadurch gekennzeichnet, dass** sich die Durchbrechung (20') über den Halteabschnitt (20.1) bis zum Anlageabschnittes (20.2) erstreckt und entlang des Anlageabschnittes (20.2) querschnittsverbreiternd in einen vorzugsweise zylinderförmigen Hohlnietraum (20.5) übergeht, der vom Nietschaftabschnitt (20.3) und vom daran anschließenden Nietflansch (20.4) umschlossen ist.

20. Anordnung nach Anspruch 18 oder 19, **dadurch gekennzeichnet, dass** der Anlageabschnitt (20.2) eine ringförmige, schräg zur Längsachse (LA) verlaufenden Anlagefläche (SAF) bildet.

21. Anordnung nach einem der Ansprüche 18 bis 20, **dadurch gekennzeichnet, dass** zwischen den am freien Ende (1.2') des Schaftabschnittes (1.2) verliergesichert angeordneten Halteblechelement (3) und dem Anlageabschnitt (20.2) ein Anlageblechelement (40) mit einer Durchbrechung (40') und einer oberseitigen Randabschrägung (40'') angeordnet ist und dass das Anlageblechelement (40) mit der Randabschrägung (40'') an der schräg zur Längsachse (LA) verlaufenden Anlagefläche (SAF) des Anlageabschnittes (20.2) flächig anliegt und/oder dass der Durchmesser (d7) der Durchbrechung (40') des Anlageblechelementes (40) näherungsweise dem Durchmesser (d5) der Durchbrechung (20') des Halteabschnittes (20.1) entspricht.

22. Anordnung nach einem der Ansprüche 18 bis 21, **dadurch gekennzeichnet, dass** das Halteblechelement (3) an der Unterseite des Anlageblechelementes (40) anliegt, wobei der Außendurchmesser des Halteblechelements (3) kleiner als der Durchmesser (d6) des Hohlnietraumes (20.5) und größer als der Durchmesser (d7) der Durchbrechung (40') des Anlageblechelementes (40) gewählt ist.

23. Vorgefertigte Baugruppe umfassend eine Anordnung gemäß einem der Ansprüche 1 bis 22.

24. Vorgefertigte Baugruppe nach einem Anspruche 23, **dadurch gekennzeichnet, dass** das Bauteil (2) mit einem weiteren Bauteil (9) mit einer korrespondierenden Durchbrechung (9') verbunden ist.

Fig. 1

Fig. 2

Fig. 3

**Fig. 4**

d4

5   LA   5   2

S

2'

E

z
y   x

**Fig. 5**

E

d4

2

5

A

x

5

2'

5

LA

y

z  x

Fig. 6

Fig. 7

Fig. 8

Fig. 9

d4

5'    5'    2

S

E

2'

LA

z

y    x

**Fig. 10**

E

d4

2

B'

5'

5'

x

2'

LA

y

z ● → x

**Fig. 11**

Fig. 12

Fig. 13

Fig. 14

1.3

1.1          1           1.11

AF

4""""

1.2

1.12, AF    LA

**Fig. 15**

1.2          1.3          1

4""""

DA

1.12, AF

4""""

**Fig. 16**

2'          2

DB

5""""

X

5""""

LA

**Fig. 17**

S          2'          2

5""""    LA    5""""

**Fig. 18**

Fig. 19

Fig. 20

Fig. 21

Fig. 22

Fig. 23

**Fig. 24**

**Fig. 25**

**Fig. 26**

Europäisches
Patentamt

European
Patent Office

Office européen
des brevets

# EUROPÄISCHER RECHERCHENBERICHT

Nummer der Anmeldung

EP 19 17 3867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2017 100515 U1 (NEDSCHROEF SCHROZBERG GMBH [DE]) 16. Februar 2017 (2017-02-16) | 1-6, 13-15, 17-24 | INV. F16B37/04 |
| Y | * Absatz [0014] - Absatz [0023]; Abbildungen 1-3 * | 7-12,16 | ADD. F16B5/06 F16B37/06 |
| | ----- | | |
| Y | WO 2006/025844 A2 (TEXTRON INC [US]) 9. März 2006 (2006-03-09) | 7-9 | |
| A | * Seite 7, Zeile 23 - Seite 12, Zeile 19; Abbildung 3 * | 16 | |
| | ----- | | |
| Y | EP 1 624 202 A2 (TEXTRON INC [US]) 8. Februar 2006 (2006-02-08) | 10-12 | |
| A | * Absätze [0020], [0023]; Abbildungen 2-5 * | 16 | |
| | ----- | | |
| Y | WO 2007/101428 A1 (ACUMENT GMBH & CO OHG [DE]; EHRLER KLAUS [DE]; MAIER FRANK [DE]) 13. September 2007 (2007-09-13) * Anspruch 1; Abbildung 1 * | 16 | |
| | ----- | | |

RECHERCHIERTE SACHGEBIETE (IPC)

F16B

Der vorliegende Recherchenbericht wurde für alle Patentansprüche erstellt

| Recherchenort | Abschlußdatum der Recherche | Prüfer |
|---|---|---|
| München | 19. September 2019 | Heinzler, Markus |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 3867

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2019

| Im Recherchenbericht angeführtes Patentdokument | Datum der Veröffentlichung | Mitglied(er) der Patentfamilie | Datum der Veröffentlichung |
|---|---|---|---|
| DE 202017100515 U1 | 16-02-2017 | KEINE | |
| WO 2006025844 A2 | 09-03-2006 | BR PI0419025 A | 11-12-2007 |
| | | CA 2576349 A1 | 09-03-2006 |
| | | CN 101027142 A | 29-08-2007 |
| | | EP 1791662 A2 | 06-06-2007 |
| | | JP 2008511808 A | 17-04-2008 |
| | | KR 20070047799 A | 07-05-2007 |
| | | TW 200607934 A | 01-03-2006 |
| | | US 2005025606 A1 | 03-02-2005 |
| | | US 2006283003 A1 | 21-12-2006 |
| | | WO 2006025844 A2 | 09-03-2006 |
| EP 1624202 A2 | 08-02-2006 | BR PI0503176 A | 21-03-2006 |
| | | CA 2512967 A1 | 03-02-2006 |
| | | CN 1734106 A | 15-02-2006 |
| | | EP 1624202 A2 | 08-02-2006 |
| | | JP 2006046659 A | 16-02-2006 |
| | | KR 20060049017 A | 18-05-2006 |
| | | TW 200606066 A | 16-02-2006 |
| | | US 2007053761 A1 | 08-03-2007 |
| WO 2007101428 A1 | 13-09-2007 | DE 112007001125 A5 | 05-02-2009 |
| | | DE 202006003639 U1 | 11-05-2006 |
| | | TW 200801353 A | 01-01-2008 |
| | | WO 2007101428 A1 | 13-09-2007 |

EPO FORM P0461

Für nähere Einzelheiten zu diesem Anhang : siehe Amtsblatt des Europäischen Patentamts, Nr.12/82